Europäisches Patentamt

European Patent Office

Office européen des brevets

(19)

(11) **EP 1 013 394 B1**

(12) **FASCICULE DE BREVET EUROPEEN**

(45) Date de publication et mention
de la délivrance du brevet:
**29.05.2002 Bulletin 2002/22**

(51) Int Cl.⁷: **B29C 45/17**, B60B 5/02

(21) Numéro de dépôt: **99440367.3**

(22) Date de dépôt: **21.12.1999**

(54) **Procédé de fabrication de roues en matière synthétique à bande de roulement creuse et roue ainsi obtenue**

Verfahren zur Herstellung von Rädern aus Kunststoff mit hohler Reifenlauffläche und so hergestelltes Rad

Method for producing plastic wheels with hollow tyre tread and so obtained wheel

(84) Etats contractants désignés:
**AT BE CH CY DE DK ES FI FR GB GR IE IT LI LU MC NL PT SE**
Etats d'extension désignés:
**SI**

(30) Priorité: **21.12.1998 FR 9816290**

(43) Date de publication de la demande:
**28.06.2000 Bulletin 2000/26**

(73) Titulaire: **Dreyer, Jean-Luc
67140 Barr (FR)**

(72) Inventeur: **Dreyer, Jean-Luc
67140 Barr (FR)**

(74) Mandataire: **Nuss, Pierre et al
Cabinet Nuss
10, rue Jacques Kablé
67080 Strasbourg Cédex (FR)**

(56) Documents cités:
**FR-A- 1 527 450        US-A- 3 977 453**

- **PATENT ABSTRACTS OF JAPAN vol. 97, no. 3, 31 mars 1997 (1997-03-31) & JP 08 309780 A (MITSUBISHI ENG PLAST KK), 26 novembre 1996 (1996-11-26)**
- **PATENT ABSTRACTS OF JAPAN vol. 96, no. 10, 31 octobre 1996 (1996-10-31) & JP 08 156053 A (ENPLAS CORP; ASAHI CHEM IND CO LTD), 18 juin 1996 (1996-06-18)**

## Description

La présente invention concerne le domaine de la réalisation de pièces creuses en matière synthétique, par injection, en particulier de roues, et a pour objet un procédé de fabrication de roues en matière synthétique à bande de roulement creuse.

Un tel procédé est connu de JP-08156053 et US-3977453.

L'invention a également pour objet une roue obtenue par mise en oeuvre de ce procédé.

La réalisation d'une roue répond à un cahier des charges technique prenant en considération les efforts auxquels la roue doit pouvoir résister, ainsi que les critères esthétiques qu'elle doit respecter. Ainsi, pour répondre à un besoin de solidité, il est généralement prévu de réaliser une bande de roulement épaisse qui est recouverte ensuite d'une matière molle destinée à amortir les chocs et donc les bruits. La réalisation d'une bande de roulement épaisse impose, cependant, la fabrication de deux demi-coquilles qui sont assemblées ultérieurement entre elles par soudage.

La fabrication de pièces en matière synthétique à paroi épaisse ou très épaisse présente, toutefois, de nombreux inconvénients dus à la particularité qu'une matière synthétique présente une mauvaise conductivité thermique de sorte que les pièces obtenues sont très difficiles à refroidir sur des épaisseurs importantes. Ceci ressort de l'équation ci-après permettant de déterminer le temps t nécessaire pour qu'une pièce soit éjectée à une température moyenne Td

$$t = \frac{S^2}{\alpha.\pi}\cdot[ln\,(\frac{4}{\pi}\cdot\frac{Ti - Tm}{Td - Tm})]$$

dans laquelle

s = épaisseur de la pièce

$$\alpha = \frac{\lambda}{Cp.\rho}$$

$\lambda$ = conductivité thermique
Cp = chaleur spécifique
$\rho$ = masse volumique
Ti = température d'injection
Tm = température de paroi
Td = température de démoulage

En vue d'obtenir des temps de cycle économiquement rentables, une pièce en matière synthétique doit donc présenter une épaisseur de paroi la plus fine possible. Ainsi, par exemple, la réalisation d'une bande de roulement présentant une épaisseur de 20 mm n'est pas économiquement réaliste.

En conséquence, dans des cas où une certaine esthétique doit être préservée, il a du être fait appel à des procédés de fabrication différents présentant chacun des avantages et des inconvénients propres.

A titre d'exemple, les roues creuses de tricycles d'enfants sont généralement réalisés selon une technique de roto-moulage consistant à introduire une poudre de polymère dans un moule froid qui est ensuite mis en rotation et chauffé. Il en résulte un écoulement de la matière le long de la paroi du moule de manière à former une pièce complète. Cependant, une telle fabrication entraîne nécessairement, sur la pièce obtenue, la subsistance d'un petit trou correspondant à l'orifice d'introduction de poudre de polymère dans le moule. Une telle existence d'un orifice est inacceptable dans le cas de certaines applications.

Il existe encore d'autres techniques de fabrication de roues, à savoir, par exemple pour les roues de poubelles, qui sont réalisées par moulage dans un même moule de deux demi-coquilles, qui sont assemblées ensuite par soudage, par friction ou par vibrations. Un tel procédé de fabrication est à l'origine peu onéreux, à savoir, en ce qui concerne le moulage des deux demi-coquilles, mais l'étape de soudage consécutive grève considérablement le prix de revient de telles roues.

Par ailleurs, la réalisation de roues présentant une bande de roulement complètement creuse sur toute sa circonférence risque d'avoir pour conséquence des déformations inacceptables de ladite bande de roulement.

La présente invention a pour but de pallier ces inconvénients en proposant un procédé de fabrication de roues en matière synthétique à bande de roulement creuse qui permet l'obtention de roues, dont l'épaisseur de paroi de la bande de roulement est relativement faible, en une seule opération de moulage.

A cet effet, le procédé de fabrication de roues en matière synthétique à bande de roulement creuse, réalisées par une injection préalable de matière synthétique fondue dans un moule, suivie d'une insufflation de gaz inerte destinée à repousser la matière fondue contre les parois du moule, tout en terminant le remplissage de l'empreinte, est caractérisé en ce qu'il consiste essentiellement à réaliser l'injection de matière synthétique fondue au niveau du moyeu, par l'intermédiaire d'un orifice prévu à cet effet dans le moule et en ce que l'insufflation de gaz neutre est réalisée, à proximité du moyeu, à travers au moins un orifice prévu dans une nervure et/ou dans le voile.

L'invention a également pour objet une roue en matière synthétique creuse caractérisée en ce qu'elle est monobloc et présente une épaisseur de paroi de la bande de roulement constante et faible.

L'invention sera mieux comprise, grâce à la description ci-après, qui se rapporte à un mode de réalisation préféré, donné à titre d'exemple non limitatif, et expliqué avec référence au dessin schématique annexé, dans lesquels :

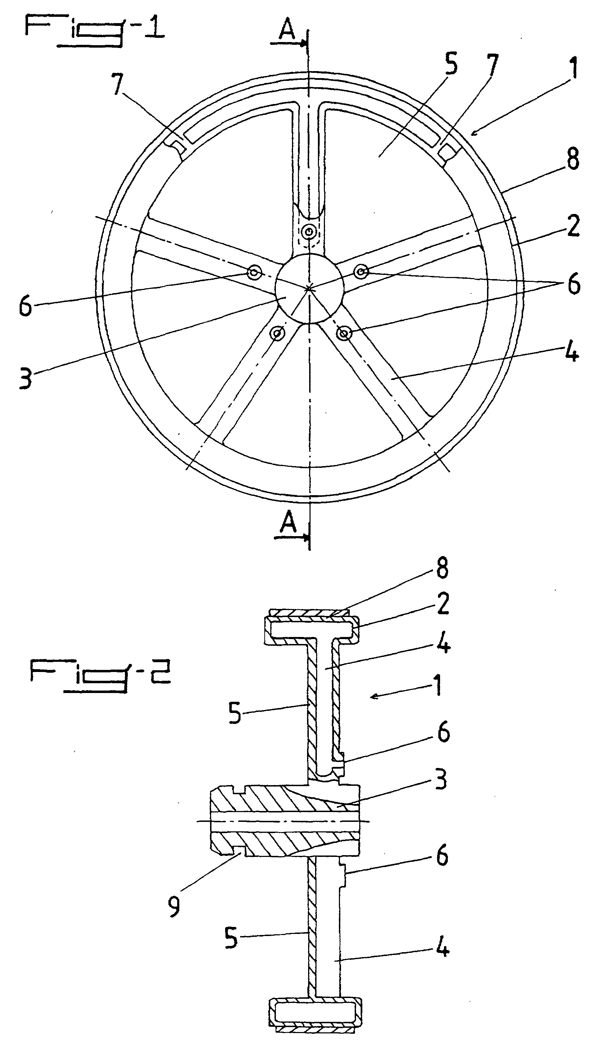

la figure 1 est une vue en élévation latérale et partiellement en coupe d'une roue obtenue par mise en oeuvre du procédé conforme à l'invention, et la figure 2 est une vue en coupe suivant A-A de la figure 1.

Conformément à l'invention et comme le montrent plus particulièrement, à titre d'exemple, les figures 1 et 2 du dessin annexé, le procédé de fabrication de roues en matière synthétique à bande de roulement creuse, réalisées par une injection préalable de matière synthétique fondue dans un moule, suivie d'une insufflation de gaz inerte destinée à repousser la matière fondue contre les parois du moule, tout en terminant le remplissage de l'empreinte, est caractérisé en ce qu'il consiste essentiellement à réaliser l'injection de matière synthétique fondue au niveau du moyeu 3, par l'intermédiaire d'un orifice prévu à cet effet dans le moule et en ce que l'insufflation de gaz neutre est réalisée, à proximité du moyeu 3, à travers au moins un orifice 6 prévu dans une nervure 4 et/ou dans le voile 5. Ainsi, il est possible de réaliser une roue 1 comportant une bande de roulement 2 reliée à un moyeu 3 par l'intermédiaire de nervures 4 et/ou d'un voile 5.

De préférence, l'insufflation de gaz est effectuée à travers plusieurs orifices 6 disposés à intervalles angulaires réguliers autour du moyeu, sur les nervures 4 et/ou dans le voile 5.

A cet effet, la roue 1 est pourvue de nervures 4 de liaison du moyeu 3 à la bande de roulement 2 disposées à intervalles réguliers dans le voile 5, chaque nervure 4 étant pourvue, près du moyeu 3 d'un orifice 6 d'injection de gaz neutre. Ainsi, chaque orifice 6 sera relié à un injecteur, l'ensemble des injecteurs reliés aux orifices 6 des nervures 4 étant reliés à une source commune de gaz neutre sous pression. Il en résulte que tous les injecteurs reliés aux orifices 6 délivrent simultanément le gaz neutre à une pression identique dans chaque nervure 4, de sorte que l'expansion dudit gaz dans lesdites nervures s'effectue de manière identique et aboutit à la formation de bulles s'étendant chacune dans la nervure 4 correspondante et de part et d'autre de la partie de la bande de roulement 2 coopérant avec l'extrémité de la nervure 4.

Les bulles réalisées par l'injection de gaz à partir de chaque orifice 6 réalisent ainsi une application intime de la matière synthétique contre les parois correspondantes du moule, à savoir celles délimitant les nervures 4 et la bande de roulement 2, ces bulles s'expansant de manière parfaitement équilibrée dans la partie du moule correspondant à la bande de roulement 2 en formant, entre deux bulles émanant de deux nervures 4 différentes, une paroi de séparation 7 (figure 1). En effet, il convient de rappeler que théoriquement deux bulles ne peuvent se perforer, de sorte qu'il se forme obligatoirement entre deux bulles déformant une matière visqueuse une paroi ou un matelas de matière déterminant les parois de séparation 7 qui constituent un genre de nervures de renforcement transversales à l'intérieur de la bande de roulement 2. Après solidification de la matière synthétique constituant la roue, la pression de gaz neutre est coupée et les conduites reliées aux injecteurs coopérant avec les orifices 6 sont vidés de sorte que ledit gaz est évacué du corps de la roue 1 ne laissant subsister dans cette dernière que les veines formées dans la matière la constituant.

Il est également envisageable, dans le cas de réalisation de roues présentant un voile épais, de délimiter dans ce voile, à intervalles réguliers un certain nombre de poches par injection de gaz neutre au moyen d'orifices 6 correspondants. Ce mode de réalisation n'est pas représenté en détail dans les figures 1 et 2.

Le procédé de fabrication conforme à l'invention permet donc, par un dosage approprié de l'injection de matière synthétique et par la répartition des orifices 6 d'injection, de réaliser des épaisseurs de paroi des nervures et de la bande de roulement relativement faible, tout en assurant une bonne rigidité de cette dernière, c'est-à-dire en évitant sa déformation sous charge. Ainsi, à titre d'exemple, une roue d'un diamètre de 250 mm comportant une bande de roulement d'une hauteur de 24 mm présentera un voile d'une épaisseur de 3 mm et des nervures d'une largeur de l'ordre de 12 mm, alors que l'épaisseur de paroi de la bande de roulement sera de l'ordre de 3 à 5 mm.

Bien entendu, le nombre de nervures 4 prévues dans le voile 5 et formant des rayons de rigidification dudit voile 5, ainsi que l'épaisseur de ce dernier sont fonction des dimensions extérieures de la roue et de l'épaisseur souhaitée de la bande de roulement. De préférence, les nervures 4 présentent une section circulaire et forment ainsi des rayons mécaniquement très solides.

Selon une autre caractéristique de l'invention, la roue en matière synthétique ainsi obtenue est pourvue, par surmoulage, d'une bande de revêtement 8 en une matière synthétique molle, telle qu'un caoutchouc synthétique, destiné à former la bande de roulement proprement dite de la roue et à éviter les phénomènes de chocs et de bruits liés au roulement de la roue sur le sol. L'épaisseur de cette bande de revêtement 8 est comprise entre 3 mm et 5 mm.

L'invention a également pour objet une roue creuse en matière synthétique caractérisée en ce qu'elle présente une bande de roulement 2 munie de sections creuses délimitées par des parois transversales 7, ces sections creuses étant reliées chacune à une section creuse correspondante délimitée dans une nervure correspondante 4 et/ou dans le voile 5.

Selon une autre caractéristique de l'invention, la roue 1 peut être munie, sur au moins un côté de son moyeu 3 d'un moyen 9 de guidage et d'encliquetage sur un support. Ce moyen 9 peut être sous forme d'une gorge périphérique (figure 2), permettant, d'une part, son maintien par encliquetage avec un dispositif à griffes ou analogue du support et, d'autre part, son guidage en rotation par l'intermédiaire de ce dispositif. En effet, par l'encliquetage des griffes d'un dispositif de griffe dans la gorge formant le moyen 9, le moyeu 3 est retenu en translation et simultanément guidé en rotation..

Un tel mode de réalisation permet la suppression d'un axe métallique de montage, le support correspondant étant modifié en conséquence, le dispositif à griffes pouvant être réalisé simultanément par moulage avec le support. Il en résulte que la roue 1 peut être facilement et rapidement montée sur le support.

La roue conforme à l'invention est plus particulièrement destinée à équiper des matériels déplaçables tels que des conteneurs urbains, ainsi que de petits appareils d'entretien comme les tondeuses à gazon ou encore des roues pour vélos d'enfants ou des roues de poussettes pour le transport d'enfants. Cette énumération n'est cependant nullement exhaustive.

Grâce à l'invention, il est possible de réaliser, par injection assistée par gaz des roues creuses en matière synthétique dont les bandes de roulement présentent des parois d'épaisseur relativement faible, tout en étant suffisamment rigide pour résister aux charges auxquelles elles sont normalement soumises. Il en résulte, que pour un même diamètre, les roues ainsi obtenues sont plus légères et nécessitent donc la mise en oeuvre de moins de matière synthétique, de sorte que leur prix de revient peut être réduit en conséquence.

Bien entendu, l'invention n'est pas limitée au mode de réalisation décrit et représenté au dessin annexé. Des modifications restent possibles, notamment du point de vue de la constitution des divers éléments ou par substitution d'équivalents techniques, sans sortir pour autant du domaine de protection de l'invention.

**Revendications**

1. Procédé de fabrication de roues en matière synthétique à bande de roulement creuse, réalisées par une injection préalable de matière synthétique fondue dans un moule, suivie d'une insufflation de gaz inerte destinée à repousser la matière fondue contre les parois du moule, tout en terminant le remplissage de l'empreinte, **caractérisé en ce qu'**il consiste essentiellement à réaliser l'injection de matière synthétique fondue au niveau du moyeu (3), par l'intermédiaire d'un orifice prévu à cet effet dans le moule et **en ce que** l'insufflation de gaz neutre est réalisée, à proximité du moyeu (3), à travers au moins un orifice (6) prévu dans une nervure (4) et/ou dans le voile (5).

2. Procédé, suivant la revendication 1, **caractérisé en ce que** l'insufflation de gaz est effectuée à travers plusieurs orifices (6) disposés à intervalles angulaires réguliers autour du moyeu (3), sur les nervures (4) et/ou dans le voile (5).

3. Procédé, suivant l'une quelconque des revendications 1 et 2, **caractérisé en ce que** chaque orifice (6) prévu dans une nervure (4) et/ou dans le voile (5) est relié à un injecteur, l'ensemble des injecteurs reliés aux orifices (6) étant reliés à une source commune de gaz neutre sous pression.

4. Procédé, suivant l'une quelconque des revendications 1 à 3, **caractérisé en ce qu'**après solidification de la matière synthétique constituant la roue, la pression de gaz neutre est coupée et les conduites reliées aux injecteurs coopérant avec les orifices (6) sont vidées, de sorte que ledit gaz est évacué du corps de la roue (1) ne laissant subsister dans cette dernière que les veines formées dans la matière la constituant.

5. Procédé, suivant l'une quelconque des revendications 1 à 4, **caractérisé en ce que** les bulles d'air formées par l'injection de gaz à partir de chaque orifice (6) réalisent une application intime de la matière synthétique contre les parois correspondantes du moule, à savoir celles délimitant les nervures (4) et la bande de roulement (2), ces bulles s'expansant de manière équilibrée dans la partie du moule correspondant à la bande de roulement (2) en formant, entre deux bulles émanant de deux nervures (4) différentes, une paroi de séparation (7).

6. Roue en matière synthétique creuse, obtenue par mise en oeuvre du procédé suivant l'une quelconque des revendications 1 à 5, **caractérisée en ce qu'**elle est monobloc et présente une épaisseur de paroi de la bande de roulement (2) constante et faible.

7. Roue, suivant la revendication 6, **caractérisée en ce qu'**elle présente une bande de roulement (2) munie de sections creuses délimitées par des parois transversales (7), ces sections creuses étant reliées chacune à une section creuse correspondante délimitée dans une nervure correspondante (4) et/ou dans le voile (5).

8. Roue, suivant la revendication 7, **caractérisée en ce que** les nervures (4) de liaison du moyeu (3) à la bande de roulement (2) sont disposées à intervalles réguliers dans un voile (5), chaque nervure (4) étant pourvue, près du moyeu (3) d'un orifice (6) d'injection de gaz neutre.

9. Roue, suivant la revendication 7, **caractérisée en ce qu'**elle est pourvue à intervalles réguliers, dans son voile (5) d'un certain nombre de poches réalisées par injection de gaz neutre au moyen d'orifices (6) correspondants.

10. Roue, suivant l'une quelconque des revendications 7 et 8, **caractérisée en ce que** les nervures (4) présentent une section circulaire et forment ainsi des rayons mécaniquement très solides.

11. Roue, suivant l'une quelconque des revendications 6 à 10, **caractérisée en ce qu'**elle est pourvue, par surmoulage, d'une bande de revêtement (8) en une matière synthétique molle, telle qu'un caoutchouc synthétique, destiné à former la bande de roulement proprement dite de la roue et à éviter les phénomènes de chocs et de bruits liés au roulement de la roue sur le sol.

12. Roue, suivant l'une quelconque des revendications 7 et 8, **caractérisée en ce qu'**elle est munie, sur au moins un côté de son moyeu (3) d'un moyen (9) de guidage et d'encliquetage sur un support.

13. Roue, suivant la revendication 12, **caractérisée en ce que** le moyen (9) de guidage et d'encliquetage sur un support est sous forme d'une gorge périphérique, permettant, d'une part, son maintien par encliquetage avec un dispositif à griffes ou analogue du support et, d'autre part, son guidage en rotation par l'intermédiaire de ce dispositif.

**Patentansprüche**

1. Verfahren zur Herstellung von Kunststoffrädern mit hohler Lauffläche, die gefertigt werden durch vorhergehendes Einspritzen von geschmolzenem Kunststoff in eine Form und anschließendes Einblasen von Inertgas, um das geschmolzene Material gegen die Wände der Form zu drücken, wobei gleichzeitig das Füllen des Hohlraumes beendet wird, **dadurch gekennzeichnet, dass** es im Wesentlichen darauf beruht, das Einspritzen von geschmolzenem Kunststoff in Höhe der Nabe (3) mittels einer zu diesem Zweck in der Form vorgesehenen Öffnung durchzuführen, und dadurch, dass das Einblasen von Neutralgas in der Nähe der Nabe (3) durch wenigstens eine in einer Rippe (4) und/oder in der Radscheibe (5) vorgesehene Öffnung (6) erfolgt.

2. Verfahren nach Anspruch 1, **dadurch gekennzeichnet, dass** das Einblasen von Gas durch mehrere Öffnungen (6) erfolgt, die in regelmäßigen Winkelabständen um die Nabe (3) an den Rippen (4) und/oder in der Radscheibe (5) angeordnet sind.

3. Verfahren nach irgendeinem der Ansprüche 1 und 2, **dadurch gekennzeichnet, dass** jede in einer Rippe (4) und/oder in der Radscheibe (5) vorgesehene Öffnung (6) mit einer Einspritzdüse verbunden ist, wobei alle mit den Öffnungen (6) verbundenen Einspritzdüsen mit einer gemeinsamen Quelle von unter Druck stehendem Neutralgas verbunden sind.

4. Verfahren nach irgendeinem der Ansprüche 1 bis 3, **dadurch gekennzeichnet, dass** nach Verfestigung des das Rad bildenden Kunststoffs, der Neutralgasdruck unterbrochen wird und die Leitungen, welche mit den mit den Öffnungen (6) zusammenwirkenden Einspritzdüsen verbunden sind, entleert werden, so dass das genannte Gas aus dem Körper des Rades (1) abgeführt wird, wodurch in letzterem lediglich die Adern weiter bestehen, welche in dem das Rad bildenden Material ausgebildet sind.

5. Verfahren nach irgendeinem der Ansprüche 1 bis 4, **dadurch gekennzeichnet, dass** die durch das Einspritzen von Gas aus jeder Öffnung (6) gebildeten Luftblasen eine enge Anlage des Kunststoffs an den entsprechenden Wänden der Form bewirken, nämlich an denjenigen, welche die Rippen (4) und die Lauffläche (2) begrenzen, wobei sich diese Blasen ausgeglichen in dem der Lauffläche (2) entsprechenden Teil der Form ausdehnen, indem zwischen zwei von zwei unterschiedlichen Rippen (4) ausgehenden Blasen eine Trennwand (7) gebildet wird.

6. Hohlrad aus Kunststoff, welches durch Anwendung des Verfahrens nach irgendeinem der Ansprüche 1 bis 5 erhalten wird, **dadurch gekennzeichnet, dass** es aus einem Stück besteht und eine konstante und geringe Wanddicke der Lauffläche (2) aufweist.

7. Rad nach Anspruch 6, **dadurch gekennzeichnet, dass** es eine Lauffläche (2) aufweist, die mit Hohlabschnitten versehen ist, welche durch Querwände (7) begrenzt sind, wobei diese Hohlabschnitte jeweils mit einem entsprechenden begrenzten Hohlabschnitt in einer entsprechenden Rippe (4) und/oder in der Radscheibe (5) verbunden sind.

8. Rad nach Anspruch 7, **dadurch gekennzeichnet, dass** die Rippen (4) zur Verbindung der Nabe (3) mit der Lauffläche (2) in regelmäßigen Abständen in einer Radscheibe (5) angeordnet sind, wobei jede Rippe (4) in der Nähe der Nabe (3) mit einer Öffnung (6) zum Einspritzen von Neutralgas versehen ist.

9. Rad nach Anspruch 7, **dadurch gekennzeichnet, dass** es in seiner Radscheibe (5) in regelmäßigen Abständen mit einer bestimmten Anzahl von Taschen versehen ist, die durch Einspritzen von Neutralgas mittels entsprechender Öffnungen (6) ausgebildet werden.

10. Rad nach irgendeinem der Ansprüche 7 und 8, **dadurch gekennzeichnet, dass** die Rippen (4) einen kreisförmigen Querschnitt aufweisen und somit mechanisch sehr stabile Speichen bilden.

**11.** Rad nach irgendeinem der Ansprüche 6 bis 10, **dadurch gekennzeichnet, dass** es durch Abformen mit einer Beschichtungsbahn (8) aus einem weichen Kunststoff, wie zum Beispiel einem Kunstgummi versehen ist, der die eigentliche Lauffläche des Rades bilden und Stoß- sowie Geräuscherscheinungen, welche mit dem Laufen des Rades auf dem Boden verbunden sind, vermeiden soll.

**12.** Rad nach irgendeinem der Ansprüche 7 und 8, **dadurch gekennzeichnet, dass** es auf wenigstens einer Seite seiner Nabe (3) mit einem Mittel (9) zum Führen und Einrasten an einem Träger versehen ist.

**13.** Rad nach Anspruch 12, **dadurch gekennzeichnet, dass** das Mittel (9) zum Führen und Einrasten an einem Träger in Form einer umlaufenden Rille ausgebildet ist, die einerseits dessen Halt durch Verrasten mit einer Klauenvorrichtung oder ähnlichen Vorrichtung des Trägers und andererseits dessen Drehführung mittels dieser Vorrichtung ermöglicht.

**Claims**

**1.** A method for producing plastic wheels with hollow tyre tread, comprising a preliminary injection of molten plastics material into a mould, followed by the introduction of inert gas to push the molten material against the walls of the mould, whilst completing the filling of the mould cavity, **characterised in that** it consists essentially of injecting the molten plastics material in the region of the hub (3), through an orifice provided for the purpose in the mould, and **in that** the neutral gas is introduced near the hub (3) through at least one orifice (6) provided in a rib (4) and or in the web (5).

**2.** A method, according to Claim 1, **characterised in that** the gas is introduced through several orifices (6) disposed at regular angular intervals around the hub (3), on the ribs (4) and/or in the web (5).

**3.** A method, according to either of Claim 1 or Claim 2, **characterised in that** each orifice (6) provided in a rib (4) and/or in the web (5) is linked to an injector, the group of injectors linked to the orifices (6) being connected to a common source of neutral gas under pressure.

**4.** A method, according to any of Claims 1 to 3, **characterised in that** after solidification of the plastics material constituting the wheel, the pressure of neutral gas is removed and the pipes linked to the injectors co-operating with the orifices (6) are emptied, so that the said gas is evacuated from the body of the wheel (1) leaving in the latter only voids formed in the material thereof.

**5.** A method, according to any of Claims 1 to 4, **characterised in that** the bubbles of air formed by the injection of gas from each orifice (6) result in an intimate application of the plastics material against the corresponding walls of the mould, that is those delimiting the ribs (4) and the tyre tread (2), these bubbles expanding in a regular manner in the part of the mould corresponding to the tyre tread (2) forming, between two bubbles emanating from two different ribs (4), a separation wall (7).

**6.** A wheel of hollow plastics material, obtained by the method of any of Claims 1 to 5, **characterised in that** it is one piece and has a constant thin wall thickness of the tyre tread (2).

**7.** A wheel, according to Claim 6, **characterised in that** it has a tyre tread (2) provided with hollow sections delimited by transverse walls (7), these hollow sections each being linked to a corresponding hollow section in a corresponding rib (4) and/or in the web (5).

**8.** A wheel, according to Claim 7, **characterised in that** the ribs (4) extending from the hub (3) to the tyre tread (2) are disposed at regular intervals in a web (5), each rib (4) being provided near the hub (3) with an orifice (6) for injection of neutral gas.

**9.** A wheel, according to Claim 7, **characterised in that** its web (5) is provided at regular intervals with a certain number of pockets formed by injection of neutral gas through of corresponding orifices (6).

**10.** A wheel, according to Claim 7 or Claim 8, **characterised in that** the ribs (4) have a circular section and form mechanically rigid spokes.

**11.** A wheel, according to any of Claims 6 to 10, **characterised in that** it is provided, by over-moulding, with a covering band (8) of soft plastics material, such as synthetic rubber, intended to form the actual tyre tread of the wheel and to prevent the phenomena of shocks and noise from the rolling of the wheel on the ground.

**12.** A wheel, according to either Claim 7 or Claim 8, **characterised in that** it is provided on at least one side of the hub (3) with guide and detent means (9).

**13.** A wheel, according to Claim 12, **characterised in that** the guide and detent means (9) is in the form of a peripheral groove, permitting it, on the one hand, to be held on a support by a device with claws or the like and, on the other hand, to be guided for rotation by means of such a device.

Fig-1

Fig-2